# EUROPÄISCHE PATENTSCHRIFT

(11) **EP 2 014 964 B1**
(45) Veröffentlichungstag und Bekanntmachung des Hinweises auf die Patenterteilung: **23.11.2011**
(21) Anmeldenummer: 08405146.5
(22) Anmeldetag: 26.05.2008
(51) Int. Cl.: F16K 27/10, C22C 9/04

(54) **Armatur**
Valve
Armature

(30) Priorität: 05.06.2007 CH 8882007
(43) Veröffentlichungstag der Anmeldung: 14.01.2009
(73) Patentinhaber: R. Nussbaum AG, 4601 Olten (CH)
(72) Erfinder: Bobst, Urs, CH-4703 Kestenholz (CH); Zeiter, Patrik, CH-4853 Riken (CH)
(74) Vertreter: Rüfenacht, Philipp Michael

(56) Entgegenhaltungen:
- EP-A- 1 561 982
- EP-A- 1 749 897

## Beschreibung

### Technisches Gebiet

Die Erfindung betrifft eine Gebäudearmatur, insbesondere ein Schräg- oder ein Geradsitzventil für den Trinkwasserbereich, umfassend ein Armaturengehäuse mit wenigstens einem Pressanschluss, wobei das Armaturengehäuse und der Pressanschluss aus einer Kupferlegierung mit Si, Zn und wenigstens 80 Gew.-% Cu bestehen. Des Weiteren bezieht sich die Erfindung auf ein Verfahren zur Herstellung einer Gebäudearmatur.

### Stand der Technik

Metallische Werkstoffe für trinkwasserführende Bauteile, wie z. B. Armaturen, Rohre, Fittings, Ventile oder Pressverbinder, unterliegen besonderen Anforderungen. Insbesondere sollten derartige Bauteile eine hohe Korrosionsbeständigkeit bzw. Dauerhaftigkeit aufweisen, so dass auch eine langjährige Verwendung möglich ist. Zudem ist es unerlässlich, dass die Bauteile das Trinkwasser so gering wie möglich mit Schadstoffen belasten. Insbesondere Schwermetalle und deren Ionen, welche sich aus den Bauteilen herauslösen können, stellen ein ernsthaftes Gesundheitsproblem für Mensch und Tier dar.

Trinkwasserführende Bauteile werden heutzutage mehrheitlich aus hoch kupferhaltigen Buntmetalllegierungen, insbesondere Bronze oder Rotguss, hergestellt. Rotgusslegierungen weisen neben Kupfer als Hauptlegierungsbestandteile Zinn und Zink auf. Um die Bearbeitbarkeit und insbesondere die Zerspanbarkeit zu verbessern, enthalten die Rotgusslegierungen meist zusätzlich Blei und Nickel. Derartige Legierungen geben aber beachtliche Mengen von gesundheitsschädlichem Blei und Nickel an das Trinkwasser ab und dürften die in zukünftigen Trinkwasserverordnungen geforderten tieferen Grenzwerte bezüglich der Schwermetallionenabgabe kaum mehr erfüllen.

Aus der EP 1 045 041 ist eine bleifreie Kupferlegierung für trinkwasserführende Bauteile bekannt, welche bis zu 79 Gew.-% Kupfer, 2-4 Gew.-% Silizium und als Rest Zink enthält. Wie sich herausgestellt hat, ist die Korrosionsbeständigkeit dieser Legierung aber nur ungenügend.

Zudem können die bis heute bekannten bleifreien Kupferlegierungen sowie auch die üblicherweise verwendeten Rotgusslegierungen nur mit grossem Aufwand oder gar nicht mechanisch umgeformt werden. Bauteile aus derartigen Legierungen werden daher meist in teuren Giessverfahren hergestellt und anschliessend meist mit zerspanenden Verfahren nachbearbeitet. Daraus ergeben sich aber je nach Komplexität der Bauteile sehr hohe Produktionskosten.

Die EP 1 561 982 A1 beschreibt eine Gebäudearmatur mit einem Ventil für Fluide in Leitungssystemen, wobei die Ventile als Geradesitzventile oder Schrägsitzventile ausgebildet sein können. Die Armatur kann zudem einen Pressanschluss umfassen. Ein Gehäuse besteht dabei aus mindestens zwei Teilen, welche fluiddicht zusammengefügt werden, wobei die Teile geklebt, gebördelt, aufgeschrumpft oder auch geschweisst werden können. Als mögliche Materialien werden Edelstahl, Aluminium/ Aluminiumlegierungen, Kupfer/Kupferlegierungen und Titan/Titanlegierungen genannt. Die genaue Zusammensetzung der Kupferlegierung ist nicht erwähnt.

Die EP 1 749 897 A1 beschreibt ein Verfahren zur Herstellung von Armaturen in einer Trinkwasserinstallation, wobei die Armaturen aus einer Kupfer-Zinn-, Kupfer-Zinn-Zink- oder Kupfer-Silizium-Zink-Legierung gegossen werden. Unter anderem wird eine Kupfer-Silizium-Zink-Legierung erwähnt, welche einen Kupfergehalt von 83 bis 85% aufweist.

Es besteht daher nach wie vor ein Bedarf nach trinkwasserführenden Bauteilen, welche sich kostengünstiger herstellen lassen und gleichzeitig den Anforderungen im Trinkwasserbereich gerecht werden.

### Darstellung der Erfindung

Aufgabe der Erfindung ist es, eine dem eingangs genannten technischen Gebiet zugehörende Gebäudearmatur zu schaffen, welche kostengünstig herstellbar, dauerhaft und insbesondere für den Trinkwasserbereich geeignet ist.

Die Lösung der Aufgabe ist durch die Merkmale des Anspruchs 1 definiert.

Überraschenderweise wurde gefunden, dass sich Kupferlegierungen mit einem Anteil von mehr als 80 Gew.-% Cu, welche zudem Si und Zn als Legierungskomponenten enthalten, verschweissen lassen. Derartige Legierungen werden zu den Bronzen gerechnet. Bronzen galten aber bis anhin als nicht schweissbar. Im Rahmen der Erfindung lassen sich das Armaturengehäuse und die Pressanschlüsse separat und unabhängig voneinander vorfertigen und erst anschliessend durch Verschweissung stoffschlüssig verbinden. Dies erlaubt eine weitaus effizientere und wirtschaftliche Herstellung von Gebäudearmaturen, da sowohl für das Armaturengehäuse als auch für die Pressanschlüsse das jeweils kostengünstigste und zweckmässigste Herstellungsverfahren eingesetzt werden kann.

Verschweisste Pressanschlüsse zeichnen sich insbesondere durch eine hohe Dichtigkeit aus, da diese entlang ihrem gesamten Umfang stoffschlüssig mit dem Armaturengehäuse verbunden sind. Geschweisste Verbindungen sind zudem langzeitig stabil und weisen keinerlei zusätzliche Verbindungsvorrichtungen oder Dichtmaterialien, wie z. B. Klemmen, Schraubenmuttern oder Dichtringe, auf. Dies steht im deutlichen Gegensatz zu rein Form- und/oder kraftschlüssigen Verbindungen, welche beispielsweise aufgrund von Umwelteinflüssen, wie z. B. Temperaturschwankungen oder mechanischen Einwirkungen, im Laufe der Zeit undicht werden können. Zudem sind verschweisste Verbindungen sowohl bezüglich Flüssigkeiten, als auch Gasen äusserst dicht.

Für die Serienproduktion der erfindungsgemässen Gebäudearmaturen hat es sich als vorteilhaft erwiesen, das Armaturengehäuse und den Pressanschluss aus der erfindungsgemässen Kupferlegierung mit Si, Zn und wenigstens 80 Gew.-% Cu separat vorzufertigen und erst anschliessend die beiden Einzelteile stoffschlüssig miteinander zu verschweissen. Die Vorfertigung der Einzelkomponenten hat den Vorteil, dass sich an ein standardisiertes Armaturengehäuse je nach Verwendungszweck unterschiedlich ausgebildete Pressanschlüsse anbringen lassen. So lassen sich z. B. mit einem standardisierten Armaturengehäuse durch Anbringen entsprechend normierter Pressanschlüsse Gebäudearmaturen für den europäischen oder den amerikanischen Markt produzieren. Damit kann die Effizienz und die Wirtschaftlichkeit des Produktionsprozesses gesteigert werden. Prinzipiell ist es aber beispielsweise auch möglich, die vollständige Gebäudearmatur mit Pressanschlüssen in einem Gussverfahren einstückig herzustellen.

Erfindungsgemäß wird für das Armaturengehäuse und die Pressanschlüsse eine Kupferlegierung verwendet, welche folgende Legierungsbestandteile in Gew.-% aufweist:
a) 2 % ≤ Si ≤ 4.5 %, bevorzugt 2.8 % ≤ Si ≤ 4 %, und
b) 1 % ≤ Zn ≤ 17 %, bevorzugt 5 % ≤ Zn ≤ 15 %, und
c) 0.05 % ≤ Mn ≤ 2 %, bevorzugt 0.2 % ≤ Mn ≤ 0.6 %, und
d) optional 0.05 % ≤ Al ≤ 0.4 %, und
e) optional 0.05 % ≤ Sn ≤ 2 %, und
f) wobei unvermeidbare Verunreinigungen in der Summe mit einem Anteil von maximal 0.5 %, bevorzugt 0.3 %, vorliegen und
g) der restliche Anteil bevorzugt aus Cu besteht.

Wie sich gezeigt hat, eignen sich Gebäudearmaturen aus derartigen Kupferlegierungen insbesondere für den Trinkwasserbereich, also beispielsweise für trinkwasserführende Ventile. Die Korrosionsbeständigkeit derartiger Kupferlegierungen ist sehr hoch und die mit dem Trinkwasser in Kontakt stehenden Oberflächen der Gebäudearmaturen sind gegenüber Wasser und Trinkwasserinhaltsstoffen chemisch äusserst inert. Damit werden nur geringste Mengen an Legierungskomponenten freigesetzt und an das Trinkwasser abgegeben und Reaktionsprodukte mit Trinkwasserinhaltsstoffen werden nur in minimalen Mengen gebildet. Somit können auch strenge Trinkwassernormen problemlos erfüllt werden, da das Trinkwasser durch die erfindungsgemässen Gebäudearmaturen nur mit sehr geringen Mengen an gesundheitsschädlichen Stoffen, wie z. B. Schwermetallen oder deren lonen, belastet wird.

In praktischen Versuchen hat sich zudem gezeigt, dass derartige Kupferlegierungen mit den üblichen Giessverfahren, wie z. B. Sand-, Kokillen-, Schleuder-, oder Stranggussverfahren zu beliebigen Werkstücken gegossen werden können. Des Weiteren können derart hergestellte Werkstücke auch ausgezeichnet umformt und durch spanhebende Verfahren bearbeitet werden.

Die Zugabe von Si im angegebenen Bereich von 2 - 4.5 % begünstigt im Besonderen den Spanbruch bei der spanhebenden Bearbeitung. Es können zwar auch geringere Anteile an Si zugegeben werden, die erwünschte Verbesserung der Bearbeitbarkeit wird dann aber nur noch bedingt erreicht. Bei grösseren Anteilen nimmt der Werkzeugverschleiss bei der Bearbeitung stark zu, was weniger wirtschaftlich ist. Zudem wurde gefunden, dass sich insbesondere ein Anteil von Si im Bereich von 2.8 - 4 % zusätzlich positiv auf die Dehnungseigenschaften des Materials auswirkt und gleichzeitig eine minimale Abgabe von Legierungsbestandteilen an das Trinkwasser erreicht wird.

Die Zerspanbarkeit der Legierung wird des Weitern durch Zn mit einem Anteil von 1 - 17 % begünstigt. Es hat sich dabei gezeigt, dass Anteile von weniger als 1 % zwar ebenfalls möglich sind, jedoch nur einen geringen Effekt bewirken. Bei höheren Anteilen als 15 % nimmt die Korrosionsbeständigkeit ab, was ebenfalls unerwünscht ist. Eine bestmögliche Kombination aus Korrosionsbeständigkeit und Zerspanbarkeit wird daher bei einem Anteil von 5 - 15 % Zn erreicht.

Die Wirkung von Mn in der Legierung liegt in der Verfeinerung der Gefügestruktur bzw. in einer Steigerung der Homogenität des Materials. Durch einen Anteil an Mn im Bereich von 0.05 - 2 % wird eine Verbesserung der Umformbarkeit und des Erstarrungsverhaltens beim Giessen der Kupferlegierung erhalten. Geringere Anteile an Mn sind auch möglich, die Gefügestruktur wird aber weniger fein und der angestrebte Effekt reduziert sich. Höhere Anteile funktionieren zwar auch, die Abgabe von Mn aus der Kupferlegierung an das Trinkwasser nimmt dabei aber stetig zu. Um eine optimale Kombination aus geringer Mn-Abgabe und guter Gefügestruktur zu erreichen, hat sich ein Anteil von 0.2 - 0.6 % Mn erwiesen.

Um die angestrebte Abgabe von Legierungsbestandteilen so gering wie möglich zu halten, weist die Kupferlegierung mit Vorteil maximal 0.5 %, bevorzugt maximal 0.3 %, an unvermeidbaren Verunreinigungen auf.

Besonders bevorzugt sind dabei Ni und/oder Pb als unvermeidbare Verunreinigungen in der Kupferlegierung mit insgesamt nicht mehr als 0.25 Gew.-%, enthalten. Damit ist sichergestellt, dass die Abgabe dieser gesundheitsgefährdenden Schwermetalle oder deren Ionen an das Trinkwasser minimal ausfällt.

Insbesondere vorteilhaft ist das Armaturengehäuse als einstückiger Gusskörper ausgebildet. Damit weist das Armaturengehäuse keine Verbindungsbereiche zwischen verschiedenen Teilvolumen auf, was sich insbesondere positiv auf die Stabilität und Dichtigkeit des Armaturengehäuses auswirkt.

Als Giessverfahren eignen sich bevorzugt Feingiessverfahren mit Kokillen, wie sie dem Fachmann hinlänglich bekannt sind. Damit lassen sich auch komplex geformte Armaturengehäuse herstellen, welche praktisch ohne weitere Nachbearbeitung direkt mit dem Pressanschluss verbunden werden können, was die Wirtschaftlichkeit der Produktion, insbesondere bei hohen Stückzahlen, stark verbessert. Prinzipiell können aber auch andere bekannte Giessverfahren eingesetzt werden.

Falls notwendig können die einstückig ausgebildeten Gusskörper anschliessend beispielsweise durch spanhebende Verfahren oder durch Umformen nachbearbeitet werden.

Alternativ kann das Armaturengehäuse auch aus mehreren zusammengesetzten Einzelteilen bestehen. Die Einzelteile können dabei beispielsweise durch Giessverfahren und/oder durch Umformen und/oder spanhebende Verfahren vorgefertigt werden. Die Verbindung der Einzelteile kann anschliessend z. B. durch Verschweissen und/oder Umformen erfolgen. Wird z. B. ein Grundkörper eines Ventils sowie eine Einsetzöffnung für ein Absperrorgan separat vorgefertigt, lassen sich an einem standardisierten Grundkörper unterschiedliche und nach spezifischen Normen gefertigte Einsetzöffnungen für verschieden ausgebildete Absperrorgane anbringen. Im Allgemeinen sind derartige mehrstufigen Herstellungsmethoden aber weniger wirtschaftlich.

Der wenigstens eine Pressanschluss der Gebäudearmatur ist insbesondere als umgeformtes zylinderförmiges Rohr ausgebildet. Damit weist auch der Pressanschluss, abgesehen von der Verbindung mit dem Armaturengehäuse, keinerlei Verbindungsbereiche auf, was eine hohe Dichtigkeit und Stabilität garantiert. Grundsätzlich kann der Pressanschluss aber auch analog zum Armaturengehäuse als Gusskörper, welcher beispielsweise in einem Feingussverfahren mit einer Kokille hergestellt wurde, vorliegen. Dies hat sich aber als weniger wirtschaftlich erwiesen, da die erforderliche Umformung eines zylindrischen Rohrs, verglichen mit den Feingussverfahren, kostengünstiger und schneller erfolgen kann. Zudem können aus den vorgefertigten Rohren so unterschiedlich ausgeformte Pressanschlüsse hergestellt werden. Die zylinderförmigen Rohre selbst können z. B. in einem Stranggussverfahren in bekannter Weise aus einer erfindungsgemässen Kupferlegierung fabriziert werden.

Die zylinderförmigen Rohre der Pressanschlüsse weisen insbesondere eine nach der Norm DIN EN ISO 6708 festgelegte Nennweite von DN 10 - DN 150, bevorzugt DN 15 - DN 65, auf. Die Abkürzung DN steht dabei für "Diameter Nominal" und die angegebene dimensionslose Zahl entspricht ungefähr dem Innendurchmesser des Rohrs in Millimetern. Entsprechende Nennweiten nach ANSI (American National Standards Institute) betragen 3/8 Zoll - 6 Zoll, wobei der Bereich zwischen 1/2 Zoll - 2½ Zoll bevorzugt ist. Durch die Verwendung von normierten Rohren ist sichergestellt, dass sich die Pressanschlüsse bzw. die erfindungsgemässen Gebäudearmaturen an bestehenden Trinkwasserleitungen oder anderen Armaturen anschliessen lassen. Für spezielle Anwendungen ist es aber auch möglich, für die Pressanschlüsse nicht normierte Rohre zu verwenden. Es hat sich gezeigt, dass sich Rohre nach DN 10 - DN 150 gut durch Verschweissung mit dem Armaturengehäuse verbinden lassen. Kleinere oder grösser Rohre sind zwar prinzipiell auch verwendbar, das Verschweissen derartiger Rohre mit dem Armaturengehäuse hat sich aber als weniger wirtschaftlich herausgestellt.

Die Verschweissung des vorgefertigten Pressanschlusses mit dem Armaturengehäuse erfolgt bevorzugt durch ein Laser-, Wolfram-Inertgas- oder Rotations-Reibschweissverfahren.

Charakteristisch für diese Schweissverfahren ist, dass zum Schweissen keine Schweisszusatzstoffe benötigt werden und kaum Spritzer oder Schadstoffe gebildet werden. Zudem können qualitativ hochwertige Schweissverbindungen erzeugt werden, welche bezüglich Dichtigkeit und Stabilität vollständig zu befriedigen vermögen. Grundsätzlich können aber auch andere bekannte Schweissverfahren eingesetzt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine perspektivische Ansicht eines vorgefertigten Armaturengehäuses für ein Schrägsitzventil,
- Fig. 2: einen Längsschnitt des Armaturengehäuses aus Fig. 1 entlang der Linie A - B,
- Fig. 3: ein aus einem zylindrischen Rohr umgeformten Pressanschluss im Längs-schnitt, und
- Fig. 4: ein Schrägsitzventil mit zwei Pressanschlüssen und eingepresstem Rohr im Längsschnitt.

Grundsätzlich sind in den Figuren gleiche Teile mit gleichen Bezugszeichen versehen.

### Wege zur Ausführung der Erfindung

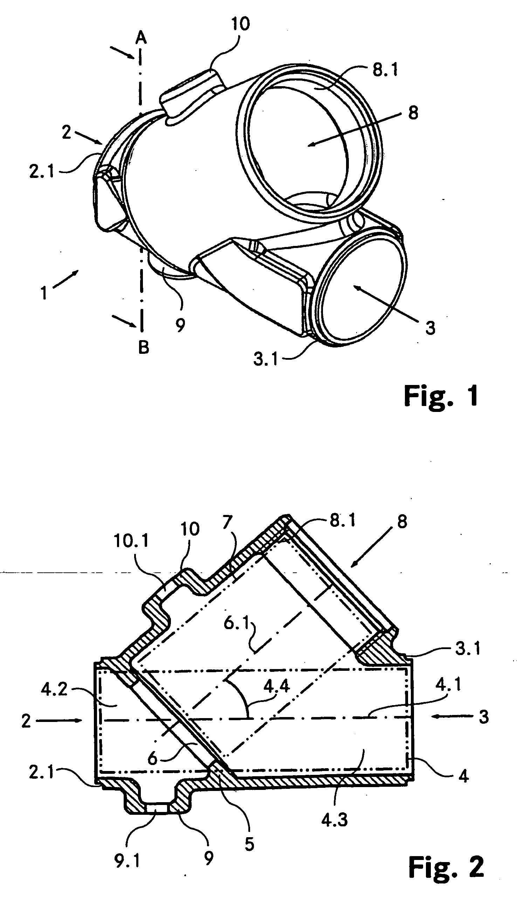

Das in Fig. 1 und 2 dargestellte Armaturengehäuse 1 ist als einstückiger Gusskörper ausgeformt und besteht aus einer Kupferlegierung aus 3.0 % Si, 10 % Zn, 0.5 % Mn und 86.3 % Cu, wobei unvermeidbare Verunreinigungen mit einem Anteil von 0.2 % vorliegen.

Das Armaturengehäuse 1 weist einen rohrartigen und im Querschnitt kreisrunden Fluideinlass 2 und einen ebensolchen Fluidauslass 3 auf. Der Fluideinlass 2 und der Fluidauslass 3 kommunizieren miteinander über einen im Wesentlichen zylinderförmigen Hohlraum 4, welcher den unteren Innenbereich des Armaturengehäuses 1 bildet. Der zylinderförmige Hohlraum 4 des Armaturengehäuses ist dabei durch eine schräg zur Längsachse 4.1 des zylinderförmigen Hohlraums 4 ausgebildete Verengung 5 in einen einlassseitigen Bereich 4.2 und einen auslassseitigen Bereich 4.3 unterteilt, wobei die Verengung 5 näher beim Fluideinlass 2 liegt, so dass der einlassseitige Bereich 4.2 kleiner ausgebildet ist als der auslassseitige Bereich 4.3. Die Verengung 5, welche den Ventilsitz bildet, weist im Zentrum einen zylindrischen Fluiddurchlass 6 auf, wobei die Längsachse 6.1 des zylindrischen Fluiddurchlasses 6 bezüglich der Längsachse 4.1 des zylinderförmigen Hohlraums 4 einen Winkel 4.4 von ca. 45° aufweist.

Im einlassseitigen Bereich 4.2 des zylindrischen Hohlraums 4 ist an der unteren Seite des Armaturengehäuses 1, unterhalb des zylindrischen Fluiddurchlasses 6, eine zylinderförmige Ausbuchtung 9 mit einer zylindrischen Öffnung 9.1 ausgeformt, welche senkrecht aus dem zylindrischen Hohlraum 4 ragt und z. B. als Prüfauge gedacht ist.

In der Richtung der Längsachse 6.1 des zylinderförmigen Fluiddurchlasses 6 erstreckt sich ein weiterer rohrartiger Hohlraum 7 zur Aufnahme eines Absperrkörpers (in Fig. 1 und 2 nicht gezeigt) im Armaturengehäuse 1. Der rohrartige Hohlraum 7 zur Aufnahme des Absperrkörpers verläuft somit bezüglich des zylinderförmigen Hohlraums 4 unter einem Winkel von ca. 45° schräg nach oben. Der rohrartige Hohlraum 7 geht dabei an seinem äusseren Ende in eine zylindrische Einsetzöffnung 8 über, wobei das Armaturengehäuse 1 in diesem Bereich beispielsweise ein Innengewinde 8.1 zum Einschrauben des Absperrkörpers aufweist.

An der oberen Seite des Armaturengehäuses 1 ist eine zweite zylinderförmige Ausbuchtung 10 mit einer zylindrischen Öffnung 10.1 im Armaturengehäuse ausgebildet. Diese ragt senkrecht aus dem rohrartigen Hohlraum 7 heraus und ist beispielsweise als Entleerauge bestimmt.

Der rohrartige Fluideinlass 2 weist im Bereich des offenen Endes von der Aussenseite her eine konkave Verjüngung 2.1 auf. Analog dazu ist auch beim Fluidauslass 3 im Bereich des offenen Endes eine konkave Verjüngung 3.1 ausgebildet. Die beiden konkaven Verjüngungen 2.1, 3.1 erleichtern beispielsweise das Anfügen von zylindrischen Bauteilen, wie z. B. Anschlussstutzen, an das Armaturengehäuse 1, indem eine koaxiale Ausrichtung der Bauteile zur Längsachse des zylinderförmigen Hohlraums 4 erleichtert wird.

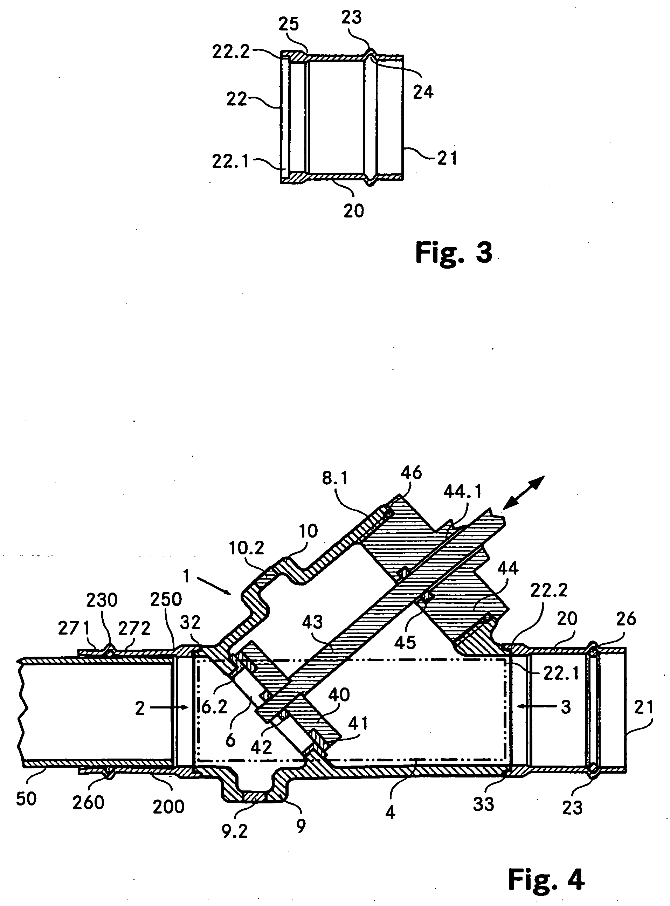

In Fig. 3 ist ein Pressanschluss 20 dargestellt, welcher aus einer Kupferlegierung aus 3.0 % Si, 10 % Zn, 0.5 % Mn und 86.3 % Cu besteht, wobei unvermeidbare Verunreinigungen mit einem Anteil von 0.2 % vorliegen. Der Pressanschluss 20 ist als ein im Wesentlichen zylindrisches Rohr ausgebildet, wobei das erste Ende 21 als Einschuböffnung für ein zu verbindendes Rohr vorgesehen ist, während das zweite Ende 22 zur Verbindung mit dem Armaturengehäuse 1 bestimmt ist. Im Bereich des Endes 21 weist der Pressanschluss 20 entlang seines gesamten Umfangs eine runde Ausbuchtung 23 auf. Aufgrund der Ausbuchtung 23 liegt im Innern des Pressanschlusses 20 eine vollständig umlaufende konkave Vertiefung 24 vor, welche beispielsweise zur Aufnahme eines O-Rings vorgesehen ist. In einem verdickten Bereich 25, nahe dem zweiten Ende 22, welches zur Verbindung mit einem Armaturengehäuse bestimmt ist, weitet sich der Pressanschluss 20 aussen konisch auf und bleibt dann bis zum zweiten Ende 22 hin konstant. Gleichzeitig verjüngt sich der Innendurchmesser des Pressanschlusses 20 im Bereich 25 nahe dem zweiten Ende 22 konisch und weitet sich nach einem kurzen konstanten Abschnitt anschliessend stufenartig wieder auf. Damit weist der Pressanschluss 20 am zweiten Ende 22 eine Bohrung 22.1 mit einer innenseitig liegenden und umlaufenden Anschlagsfläche 22.2 auf, welche senkrecht zu einer Längsachse des Pressanschlusses 20 steht. Die Bohrung 22.1 weist beispielsweise einen Innendurchmesser auf, welcher dem Aussendurchmesser des rohrartigen Fluideinlasses 2 bzw. dem Fluidauslass 3 des Armaturengehäuses 1 aus Fig. 1 und 2 entspricht.

In Fig. 4 ist ein erfindungsgemässes Schrägsitzventil in verschlossenem Zustand dargestellt. An einem Armaturengehäuse 1, wie bei Fig. 1 und 2 beschrieben, ist dabei am Fluidauslass 3 der Pressanschluss 20 aus Fig. 3 angebracht. Der Pressanschluss 20 weist in der Ausbuchtung 24 einen passend sitzenden O-Ring 26 auf, wobei der Innendurchmesser des O-Rings 26 kleiner ist, als der Innendurchmesser des Pressanschlusses 20 im Bereich des Endes 21, welches als Einschuböffnung für ein zu verbindendes Rohr vorgesehen ist. Der Pressanschluss 20 ist dabei mit seiner Bohrung 22.1 über die konkave Verjüngung 3.1 des Fluidauslass 3 geschoben, so dass die stirnseitige Fläche des Fluidauslasses 3 an der Anschlagfläche 22.2 der Bohrung 22.1 anliegt. Der Pressanschluss 20 ist im Kontaktbereich 33 mit dem Fluidauslass 3 des Armaturengehäuses verschweisst und weist eine entsprechende, jedoch nicht dargestellte, Schweissnaht auf.

Ebenso ist am Fluideinlass 2 des Armaturengehäuses 1 ein zweiter Pressanschluss 200 angebracht. Der Pressanschluss 200 ist baugleich mit dem Pressanschluss 20, welcher in Fig. 3 dargestellt ist und ist analog zum Pressanschluss 20 im Kontaktbereich 32 am Fluidauslass 2 angebracht und angeschweisst. Im Innern des zweiten Pressanschlusses 200 ist von der Aussenseite her ein Rohr 50 einer Trinkwasserleitung bis zum verdickten Bereich 250, bei welchem sich der Innendurchmesser des Pressanschlusses 200 verjüngt, eingeschoben. Der Bereich 271 vor der Ausbuchtung 230, der Bereich 272 nach der Ausbuchtung 230 und die Ausbuchtung 230 selbst sind dabei auf das Rohr 50 aufgepresst. Dadurch ist das Rohr 50 im Pressanschluss 200 fixiert und der über die Ausbuchtung 230 auf das Rohr 50 gepresste O-Ring 260 dichtet die Verbindung zwischen Rohr 50 und Pressanschluss 200 fluiddicht ab.

Die beiden Öffnungen 9.1, 10.1 der beiden zylindrischen Ausbuchtungen 9, 10 sind dabei je mit einem Blinddeckel 9.2, 10.2 fluiddicht verschlossen.

In der Einsetzöffung 8 des rohrartigen Hohlraums 7 ist ein verfahrbarer Stössel 43 mit einem aufgesteckten Ventilteller 40 angebracht. Der Ventilteller 40 weist dabei eine zentrale zylindrische Bohrung auf und ist auf den am vorderen Ende zylindrisch verjüngten Stössel 43 aufgesteckt und mit einer Sicherungsmutter 42 befestigt. Im zylindrischen Fluiddurchlass 6 ist des Weiteren ein passender Ring 6.2 aus Edelstahl mit einem oben angeformtem und nach aussen abstehenden Kragen eingepresst. Der Ring 6.2 dient dabei als Ventilsitz. Der Ventilteller 40, welcher im Kontaktbereich mit dem Ring 6.2 einen Dichtring 41 aus Kunststoff aufweist, ist dabei auf den Kragen des Rings 6.2 angedrückt und verschliesst so den Fluiddurchlass 6 vollständig. Der Stössel 43 wird im Bereich der Einsetzöffnung 8 durch eine zylindrische Bohrung 44.1 in einem Schraubeinsatz 44 geführt. Der Schraubeinsatz 44 selbst weist ein Aussengewinde auf, welches mit dem Innengewinde 8.1 des Armaturengehäuses 1 kämmt. Ein weiterer O-Ring 46 dichtet den Schraubeneinsatz 44 oberhalb des Innengewindes 8.1 gegen aussen ab. Die Abdichtung des Stössels 43 in der Bohrung 44.1 erfolgt über eine Dichtung 45 aus Kunststoff. Der verfahrbare Stössel 43 mit dem Ventilteller 40 kann über eine nicht dargestellte Spindel mit Handrad vom Ventilsitz bzw. dem Ring 6.2 aus Edelstahl abgehoben und zurückgezogen werden. Dadurch wird der in Fig. 4 verschlossen dargestellte Fluiddurchlass 6 frei und ein am Fluideinlass 2 eintretendes Fluid kann über den zylindrischen Hohlraum 4 zum Fluidauslass 3 vordringen.

Eine Prüfung des Schrägsitzventils aus Fig. 4 mit angeschweissten Pressanschlüssen 20, 200 bezüglich Dichtigkeit und mechanischer Belastbarkeit, hat ergeben, dass das Ventil vollständig zu befriedigen vermag und sämtlichen Anforderungen im Trinkwasserbereich erfüllt. So liegt die tägliche Bleiabgabe bei einer Versuchsdauer über 26 Wochen durchwegs bei einem konstant tiefen Wert von maximal 7 µg pro Liter Trinkwasser. Die analog dazu bestimmte tägliche Nickelabgabe liegt bei einem maximalen Wert von 3 µg pro Liter Trinkwasser, und die tägliche Zinkabgabe beträgt maximal 100 µg pro Liter Trinkwasser. All diese Werte liegen beispielsweise deutlich unter dem einzuhaltenden Grenzwert der deutschen Trinkwasserverordnung. Die Kupferabgabe nimmt zwar bis zum 18. Versuchstag stetig bis zu maximal 2'200 µg pro Liter Trinkwasser zu, nimmt aber anschliessend wieder ab und beträgt am 26. Versuchstag lediglich noch 1'500 µg pro Liter Trinkwasser, was ebenfalls unterhalb des einzuhaltenden Grenzwerts der deutschen Trinkwasserverordnung ist. Verglichen mit einem baugleichen Ventil aus einer konventionellen Rotgusslegierung sind die mit der erfindungsgemässen Kupferlegierung bestimmten Werte damit durchwegs um ca. 20 - 25 % geringer.

Zur Herstellung des Armaturengehäuses 1 wird eine verflüssigte Kupferlegierung, bestehend aus 3.0 % Si, 10 % Zn, 0.5 % Mn, 85.5 % Cu und 1.0% an unvermeidbaren Verunreinigungen, mit Hilfe einer Kokille in einem Feingussverfahren in an sich bekannter Weise in die in den Fig. 1 und 2 dargestellte Form gegossen.

Für die Fertigung der Pressanschlüsse 20, 200 wird in einem ersten Schritt aus einer verflüssigten Kupferlegierung, bestehend aus 3.0 % Si, 10 % Zn, 0.5 % Mn, 85.5 % Cu und 1.0% an unvermeidbaren Verunreinigungen, in einem herkömmlichen Stanggussverfahren ein zylindrisches Rohr hergestellt, welches anschliessend warmumgeformt wird. Anschliessend werden die Pressanschlüsse 20, 200 durch Drehen im Bereich der Bohrung 22.1 und im Bereich des Endes 21, welches als Einschuböffnung für ein zu verbindendes Rohr vorgesehen ist, spanhebend nachbearbeitet, um eine präzise definierte Form zu erhalten.

Zum Verbinden der Pressanschlüsse 20, 200 und des Armaturengehäuses 1 wird je einer der Pressanschlüsse 20, 200 koaxial auf den Fluideinlass 2 und den Fluidauslass 3 des Armaturengehäuses gesteckt und anschliessend mit dem Armaturengehäuse durch Laserschweissen ohne Schweisszusatzstoffe stoffschlüssig verbunden.

Die beschriebene Ausführungsform ist als illustratives Beispiel für eine von vielen möglichen Ausführungen der Erfindung zu verstehen und kann erweitert oder abgewandelt werden.

So ist es prinzipiell möglich, anstelle des in den Fig. 1 und 2 dargestellten Armaturengehäuses 1 für ein Schrägsitzventil ein anders geformtes Armaturengehäuse herzustellen und mit Pressanschlüssen 20, 200 zu versehen. Insbesondere geeignet sind beispielsweise Armaturengehäuse für Geradsitzventile, bei welchen der rohrartige Hohlraum 7 zur Aufnahme eines Absperrkörpers rechtwinklig zum Hohlraum 4 angeordnet ist.

In die Öffnung 9.1 kann anstelle des in Fig. 4 dargestellten Blinddeckels 9.2 auch ein Prüfauge eingebaut werden und die Öffnung 10.1 kann beispielsweise mit einem Entleerventil versehen werden.

Ebenso kann anstelle des in Fig. 4 dargestellten Absperrkörpers, bzw. des Stössels 43 mit dem Ventilteller 40 und Dichtring 41, auch eine anders ausgebildete Absperrvorrichtung verwendet werden. So kann z. B. der Dichtring den Ventilteller 40 aussenseitig vollständig umgeben, so dass der Dichtring bei vollständig zurückgezogenem Ventilteller 40 eine Dichtwirkung gegenüber dem Schraubeinsatz 44 aufweist. Auch kann die Bohrung 44.1 im Schraubeinsatz 44 anstelle der Dichtung 45 durch weitere Dichtungen stufenweise abgedichtet sein.

Die Pressanschlüsse 20, 200 aus Fig. 3 können ebenfalls zusätzliche Dichtelemente aufweisen oder über zusätzliche Vorrichtungen verfügen, welche eine form- und/oder kraftschlüssige Verbindung mit dem einzuschiebenden Rohr 50 verbessern. Gut geeignet sind z. B. hakenartige Vorstände an den Pressanschlüssen, welche sich beim Zusammenpressen des Pressanschlusses im einzuschiebenden Rohr verhaken.

Die Herstellung der Pressanschlüsse 20, 200 kann ebenfalls analog zum Armaturengehäuse vollständig durch ein Feingussverfahren erfolgen. Damit kann unter Umständen auf eine spanhebende Nachbearbeitung verzichtet werden. Ebenso ist es möglich, die Pressanschlüsse 20, 200 aus einem längsnahtverschweissten Blech, welches aus der erfindungsgemässen Kupferlegierung besteht, umzuformen.

Zusammenfassend ist festzustellen, dass eine neuartige Gebäudearmatur entwickelt wurde, welche sich in einem wirtschaftlichen Fabrikationsprozess herstellen lässt und welche sich durch eine hohe mechanische Festigkeit sowie eine gute Dauerhaftigkeit auszeichnet. Zudem erfüllt die erfindungsgemässe Gebäudearmatur sämtliche Anforderungen, welche sich im Trinkwasserbereich stellen und weist insbesondere eine äusserst niedrige Schwermetallionenabgabe an das Trinkwasser auf.

## Patentansprüche

1. Gebäudearmatur, Insbesondere ein Schräg- oder ein Geradsitzventil für den Trinkwasserbereich, umfassend ein Armaturengehäuse (1) mit wenigstens einem Pressanschluss (20, 200), wobei das Armaturengehäuse (1) und der Pressanschluss (20, 200) aus einer Kupferlegierung bestehen, wobei der Pressanschluss (20, 200) fluiddicht mit dem Armaturengehäuse (1) verschweisst ist, **dadurch gekennzeichnet, dass** die Kupferlegierung folgende Legierungsbestandteile in Gew.-% aufweist:
a) 2 %≤Si≤ 4.5%, bevorzugt 2.8%≤Si≤4%, und
b) 1 %≤Zn≤ 17 %, bevorzugt 5 % ≤Zn≤ 15 %, und
c) 0.05 % ≤ Mn ≤ 2%, bevorzugt 0.2 % ≤ Mn ≤ 0.6 %, und
d) optional 0.05 % ≤ Al ≤ 0.4 %, und
e) optional 0.05 % ≤ Sn ≤ 2 %, und
f) wobei unvermeidbare Verunreinigungen in der Summe mit einem Anteil von maximal 0.5 %, bevorzugt 0.3 %, vorliegen und
g) der restliche Anteil aus wenigstens 80 Gew.-% Cu besteht.

2. Gebäudearmatur nach Anspruch 1, **dadurch gekennzeichnet, dass** Ni und/oder Pb als unvermeidbare Verunreinigungen in der Kupferlegierung mit insgesamt nicht mehr als 0.25 Gew.-%, enthalten sind.

3. Gebäudearmatur nach einem der Ansprüche 1 - 2, **dadurch gekennzeichnet, dass** das Armaturengehäuse (1) als einstückiger Gusskörper ausgebildet ist.

4. Gebäudearmatur nach einem der Ansprüche 1 - 3, **dadurch gekennzeichnet, dass** der Pressanschluss (20, 200) als umgeformtes zylinderförmiges Rohr ausgebildet ist.

5. Gebäudearmatur nach Anspruch 4, **dadurch gekennzeichnet, dass** das zylinderförmige Rohr des Pressenschlusses (20, 200) eine Nennweite von DN 10 - DN 150, bevorzugt DN 15 - DN 65, aufweist.

6. Verfahren zur Herstellung einer Gebäudearmatur, wobei ein Armaturengehäuse (1) und wenigstens ein Pressanschluss (20, 200), wobei das Armaturengehäuse (1) und der Pressanschluss (20, 200) aus einer Kupferlegierung bestehen, separat vorgefertigt werden, wobei das vorgefertigte Armaturengehäuse (1) mit dem vorgefertigten Pressanschluss (20, 200) stoffschlüssig verschweisst wird, **dadurch gekennzeichnet, dass** die verwendete Kupferlegierung folgende Legierungsbestanctteile in Gew.-% aufweist:
a) 2 %≤ Si ≤ 4.5 %, bevorzugt 2.8 % ≤ Si ≤ 4 %, und
b) 1% ≤ Zn ≤ 17 %, bevorzugt 5 % ≤ Zn ≤ 15 %, und
c) 0.05 % ≤ Mn ≤ 2 %, bevorzugt 0.2 % ≤ Mn ≤ 0.6 %, und
d) optional 0.05 % ≤ Al ≤ 0.4%, und
e) optional 0.05 % ≤ Sn ≤ 2 %, und
f) wobei unvermeidbare Verunreinigungen in der Summe mit einem Anteil von maximal 0.5 %, bevorzugt 0.3 %, vorliegen und
g) der restliche Anteil aus wenigstens 80 Gew.-% Cu besteht.

7. Verfahren zur Herstellung einer Gebäudearmatur nach Anspruch 6, **dadurch gekennzeichnet, dass** Ni und/oder Pb als unvermeidbare Verunreinigungen in der verwendeten Kupferlegierung mit insgesamt nicht mehr als 0.25 Gew.-%, enthalten sind.

8. Verfahren zur Herstellung einer Gebäudearmatur nach einem der Ansprüche 6 oder 7, **dadurch gekennzeichnet, dass** das vorgefertigte Armaturengehäuse (1) durch ein Giessverfahren, insbesondere durch ein Kokillengessverfahren, einstückig hergestellt wird.

9. Verfahren zur Herstellung einer Gebäudearmatur nach einem der Ansprüche 6 - 8, **dadurch gekennzeichnet, dass** der vorgefertigte Pressanschluss (20, 200) aus einem zylindrischen Rohr umgeformt wird.

10. Verfahren zur Herstellung einer Gebäudearmatur nach Anspruch 9, **dadurch gekennzeichnet, dass** ein zylindrisches Rohr mit einer Nennweite von DN 10 - DN 150, bevorzugt DN 15 - DN 65, verwendet wird.

11. Verfahren zur Herstellung einer Gebäudearmatur nach einem der Ansprüche 6 - 10, **dadurch gekennzeichnet, dass** der vorgefertigte Pressanschluss (20, 200) durch ein Laser-, Wolfram-Inertgas- oder Rotations-Reibschweissverfahren mit dem vorgefertigten Armaturengehäuse (1) verbunden wird.

## Claims

1. Building fitting, in particular an angle seat valve or a globe valve for the drinking water sector, comprising a fitting housing (1) with at least one press connection (20, 200), wherein the fitting housing (1) and the press connection (20, 200) consist of a copper alloy, wherein the press connection (20, 200) is welded to the fitting housing (1) in a fluid-tight manner, **characterized in that** the copper alloy comprises the following alloying constituents in % by weight:
a) 2% ≤ Si ≤ 4.5%, preferably 2.8% ≤ Si ≤ 4%, and
b) 1% ≤ Zn ≤ 17%, preferably 5% ≤ Zn 15%, and
c) 0.05% ≤ Mn ≤ 2%, preferably 0.2% ≤ Mn ≤ 0.6%, and
d) optionally 0.05% ≤Al ≤ 0.4%, and
e) optionally 0.05% ≤ Sn ≤ 2%, and
f) with unavoidable impurities being present in the sum total in a proportion of at most 0.5%, preferably 0.3%, and
g) the remaining proportion consists of at least 80% by weight Cu.

2. Building fitting according to Claim 1, **characterized in that** Ni and/or Pb are present as unavoidable impurities in the copper alloy in a total of not more than 0.25% by weight.

3. Building fitting according to either of Claims 1 and 2, **characterized in that** the fitting housing (1) is in the form of a single-piece casting.

4. Building fitting according to one of Claims 1-3, **characterized in that** the press connection (20, 200) is in the form of a deformed cylindrical pipe.

5. Building fitting according to Claim 4, **characterized in that** the cylindrical pipe of the press connection (20, 200) has a nominal width of DN 10 - DN 150, preferably DN 15 - DN 65.

6. Process for producing a building fitting, wherein a fitting housing (1) and at least one press connection (20, 200), the fitting housing (1) and the press connection (20, 200) consisting of a copper alloy, are prefabricated separately, wherein the prefabricated fitting housing (1) is integrally welded to the prefabricated press connection (20, 200), **characterized in that** the copper alloy used comprises the following alloying constituents in % by weight:
a) 2% ≤ Si ≤ 4.5%, preferably 2.8% ≤ Si ≤ 4%, and
b) 1% ≤ Zn ≤ 17%, preferably 5% ≤ Zn ≤15%, and
c) 0.05% ≤ Mn ≤ 2%, preferably 0.2% ≤ Mn ≤ 0.6%, and
d) optionally 0.05% ≤ Al ≤ 0.4%, and
e) optionally 0.05% ≤ Sn 2%, and
f) with unavoidable impurities being present in the sum total in a proportion of at most 0.5%, preferably 0.3%, and
g) the remaining proportion consists of at least 80% by weight Cu.

7. Process for producing a building fitting according to Claim 6, **characterized in that** Ni and/or Pb are present as unavoidable impurities in the copper alloy used in a total of not more than 0.25% by weight.

8. Process for producing a building fitting according to either of Claims 6 and 7, **characterized in that** the prefabricated fitting housing (1) is produced in a single piece by a casting process, in particular by a gravity diecasting process.

9. Process for producing a building fitting according to one of Claims 6-8, **characterized in that** the prefabricated press connection (20, 200) is deformed from a cylindrical pipe.

10. Process for producing a building fitting according to Claim 9, **characterized in that** a cylindrical pipe having a nominal width of DN 10 - DN 150, preferably DN 15 - DN 65, is used.

11. Process for producing a building fitting according to one of Claims 6-10, **characterized in that** the prefabricated press connection (20, 200) is connected to the prefabricated fitting housing (1) by a laser welding process, a tungsten inert gas welding process or a rotational friction welding process.

## Revendications

1. Robinet pour bâtiments, en particulier vanne à siège oblique ou droit pour le secteur de l'eau potable, comprenant un boîtier (1) de robinet doté d'au moins un raccordement de pression (20, 200), le boîtier (1) de robinet et le raccordement de pression (20, 200) étant constitués d'un alliage de cuivre, le raccordement de pression (20, 200) étant soudé de manière étanche aux fluides sur le boîtier (1) du robinet,
**caractérisé en ce que**
l'alliage de cuivre présente les composants d'alliage ci-dessous, indiqués en % en poids :
a) 2 % ≤ Si ≤ 4,5 %, de préférence 2,8 % ≤ Si ≤ 4 %,
b) 1 % ≤ Zn ≤ 17 %, de préférence 5 % ≤ Zn ≤ 15 %,
c) 0,05 % ≤ Mn ≤ 2 %, de préférence 0,2 % ≤ Mn ≤ 0,6 %,
d) facultativement 0,05 % ≤ Al ≤ 0,4 %,
e) facultativement 0,05 % ≤ Sn ≤ 2 %,
f) la somme des impuretés inévitables représentant une fraction d'au plus 0,5 % et de préférence d'au plus 0,3 %,
g) le solde étant constitué de préférence d'au moins 80 % en poids de Cu.

2. Robinet pour bâtiments selon la revendication 1, **caractérisé en ce que** l'alliage de cuivre ne contient globalement pas plus de 0,25 % en poids de Ni et/ou de Pb en tant qu'impuretés inévitables.

3. Robinet pour bâtiments selon l'une des revendications 1 et 2, **caractérisé en ce que** le boîtier (1) de robinet est configuré comme corps moulé d'un seul tenant.

4. Robinet pour bâtiments selon l'une des revendications 1 à 3, **caractérisé en ce que** le raccordement de pression (20, 200) est configuré sous la forme d'un tube cylindrique moulé.

5. Robinet pour bâtiments selon la revendication 4, **caractérisé en ce que** le tube cylindrique du raccordement de pression (20, 200) présente un diamètre nominal DN 10 - DN 150 et de préférence DN 15 - DN 65.

6. Procédé de fabrication d'un robinet pour bâtiment, le robinet présentant un boîtier (1) de robinet et au moins un raccordement de pression (20, 200), le boîtier (1) de robinet et le raccordement de pression (20, 200) étant constitués d'un alliage de cuivre et étant préfabriqués séparément, le boîtier préfabriqué (1) de robinet étant soudé en correspondance de matière avec le raccordement préfabriqué de pression (20, 200), **caractérisé en ce que**
l'alliage de cuivre utilisé présente les composants d'alliage ci-dessous, indiqués en % en poids :
a) 2 % ≤ Si ≤ 4,5 %, de préférence 2,8 % ≤ Si ≤ 4 %,
b) 1 % ≤ Zn ≤ 17 %, de préférence 5 % ≤ Zn ≤ 15 %,
c) 0,05 % ≤ Mn ≤ 2 %, de préférence 0,2 % ≤ Mn ≤ 0,6 %,
d) facultativement 0,05 % ≤ Al ≤ 0,4 %,
e) facultativement 0,05 % ≤ Sn ≤ 2 %,
f) la somme des impuretés inévitables représentant une fraction d'au plus 0,5 % et de préférence d'au plus 0,3 %,
g) le solde étant constitué de préférence d'au moins 80 % en poids de Cu.

7. Procédé de fabrication d'un robinet de bâtiment selon la revendication 6, **caractérisé en ce que** l'alliage de cuivre ne contient globalement pas plus de 0,25 % en poids de Ni et/ou de Pb en tant qu'impuretés inévitables.

8. Procédé de fabrication d'un robinet de bâtiment selon l'une des revendications 6 ou 7, **caractérisé en ce que** le boîtier préfabriqué (1) de robinet est réalisé d'une seule pièce par une opération de coulée et en particulier une opération de coulée en lingotière.

9. Procédé de fabrication d'un robinet de bâtiment selon l'une des revendications 6 à 8, **caractérisé en ce que** le raccordement préfabriqué de pression (20, 200) est configuré sous la forme d'un tube cylindrique moulé.

10. Procédé de fabrication d'un robinet de bâtiment selon la revendication 9, **caractérisé en ce que** le tube cylindrique d'un diamètre nominal DN 10 - DN 150 et de préférence DN 15 - DN 65.

11. Procédé de fabrication d'un robinet de bâtiment selon l'une des revendications 6 à 10, **caractérisé en ce que** le raccordement préfabriqué de pression (20, 200) est relié au boîtier préfabriqué de robinet (1) par un procédé au laser, un procédé au tungstène et gaz inerte ou un procédé de soudage rotatif par friction.
